(19) **Europäisches Patentamt**

**European Patent Office**

**Office européen des brevets**

(11) Veröffentlichungsnummer: **0 575 636 A1**

(12) **EUROPÄISCHE PATENTANMELDUNG**

(21) Anmeldenummer: **92109760.6**

(22) Anmeldetag: **10.06.92**

(51) Int. Cl.5: **G05D 5/03**, B21B 37/12, G05B 13/02

(43) Veröffentlichungstag der Anmeldung: **29.12.93 Patentblatt 93/52**

(84) Benannte Vertragsstaaten: **AT BE DE FR IT SE**

(71) Anmelder: **SIEMENS AKTIENGESELLSCHAFT Wittelsbacherplatz 2 D-80333 München(DE)**

(72) Erfinder: **Tautz, Wilfried, Dr.-Ing. Rotkreuzstrasse 28c W-8550 Forchheim(DE)**

(54) **Verfahren zur Regelung totzeitbehafteter Regelstrecken.**

㊻ Es wird vorgeschlagen, aus dem am Meßort erfaßten Istwert den korrigierenden Einfluß des zugehörigen Stelleingriffs zu eliminieren, mit einer Reihe solcher, zeitlich aufeinanderfolgender unkorrigierter Istwerte eine prädiktive Bestimmung eines entsprechenden, aktuellen, stellortbezogenen Istwertes vorzunehmen und mit der Abweichung dieses vorhergesagten Istwertes von einem vorgegebenen Sollwert den aktuellen, korrigierenden Stelleingriff zu bewirken.

FIG 1a

Die vorliegende Erfindung bezieht sich auf ein Verfahren zur Regelung totzeitbehafteter Regelstrecken. Bei derartigen Regelstrecken kann sich eine Änderung der Stellgröße erst nach einer - meist durch eine Transportverzögerung bedingten - Totzeit am Meßort bemerkbar machen. Totzeiten verschlechtern Regeldynamik und Regelgüte nachhaltig.

Bei Warmbandstraßen beispielsweise ist es nach der Siemens-Zeitschrift 47 (1973), Beiheft "Antriebstechnik und Prozeß-automatisierung in Hütten- und Walzwerken", Seiten 91 bis 96, bekannt, als flankierende Maßnahme zur Lastwalzspaltregelung eine Banddickenregelung vorzusehen, um die Qualität des auslaufenden Bandes zu verbessern. Da eine Messung der Banddicke im Walzspalt nicht möglich ist, läßt diese, auch als "Monitorregelung" bezeichnete Banddickenregelung infolge der Transportzeit des Materials vom Stellglied bis zum Meßgerät nur eine dynamisch langsame Regelung zu.

Es ist Aufgabe der vorliegenden Erfindung, bei einem Verfahren der eingangs genannten Art, insbesondere zur Monitorregelung in Bandstraßen, ein Verfahren anzugeben, mit dem das dynamische Regelverhalten verbessert wird.

Die Lösung dieser Aufgabe gelingt erfindungsgemäß mit den im Hauptanspruch angegebenen Merkmalen. Mit der Erfindung ergibt sich der Vorteil, daß auf Störeinflüsse wesentlich schneller und präziser reagiert werden kann.

Das erfindungsgemäße Verfahren samt seinen weiteren, in Unteransprüchen gekennzeichneten Ausbildungen soll nachstehend anhand der Figuren näher veranschaulicht werden. Es zeigen:

| | |
|---|---|
| Figur 1a und 1b | das allgemeine Prinzip des erfindungsgemäßen Verfahrens, |
| Figuren 2 und 3 | zwei Ausführungsmöglichkeiten zur prädiktiven Bestimmung des aktuellen Istwertes, |
| Figur 4 | eine einfache Methode zur Totzeitnachbildung, |
| Figur 5 | die Anwendung des erfindungsgemäßen Verfahrens bei einer Dickenmonitorregelung, |
| Figur 6 | die Anwendung des erfindungsgemäßen Verfahrens bei einer Monitorregelung für das Bandprofil, |
| Figur 7 | die Anwendung des erfindungsgemäßen Verfahrens bei einer Monitorregelung für die Planheit, |
| Figur 8 | die Aufbereitung der für die Monitorregelungen nach Figur 6 und 7 verwendeten Meßwerte, |
| Figur 9 | ein Schaubild zur Aufbereitung eines Satzes von beispielhaft zugrundegelegten Meßwerten, |
| Figur 10 | die Anwendung des erfindungsgemäßen Verfahrens bei einer Mischungstemperaturregelung. |

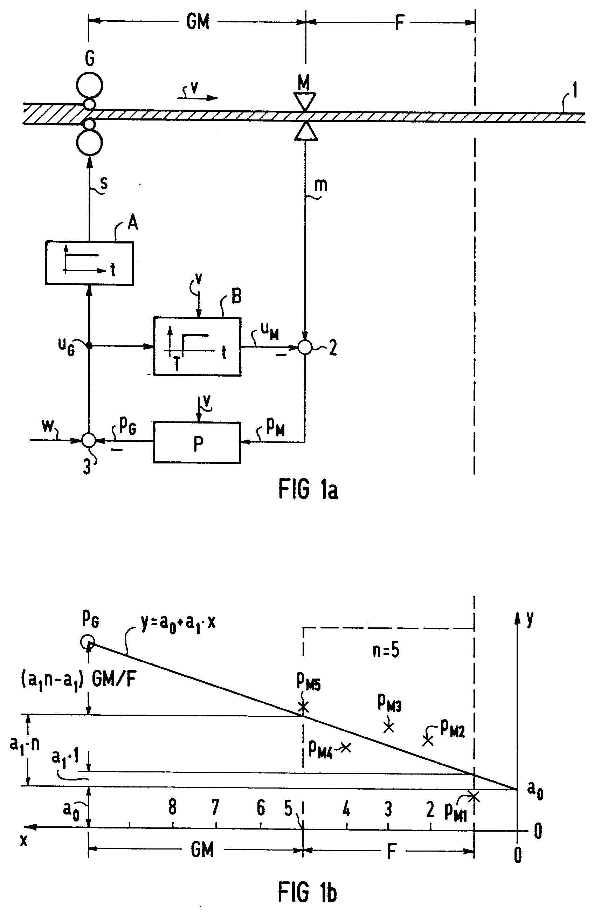

In den Figuren 1a und 1b wird zunächst das Prinzip des erfindungsgemäßen Verfahrens anhand einer Monitorregelung für ein Walzgerüst erläutert. Mit 1 ist ein aus dem letzten Gerüst G einer Walzstraße mit der Geschwindigkeit v auslaufendes Band bezeichnet. Hinter dem Gerüst G ist im Abstand GM ein Meßgerät M angeordnet, mit welchem ein bestimmtes Qualitätsmerkmal m des Bandes 1, beispielsweise seine Dicke meßtechnisch erfaßt wird. In dem Gerüst G werden Stelleingriffe s vorgenommen, welche das Merkmal m beeinflussen und sich aus der Stellgröße $u_G$ mit Hilfe einer mit A bezeichneten Anpassung ergeben, welche dafür sorgt, daß sich das Merkmal an der zwischen den Arbeitswalzen befindlichen Stelle genau um den Wert $u_G$ ändert. Im wesentlichen wird diese Anpassung aus einem Proportionalverstärker bestehen.

Während das Band vom Gerüst G zum Meßgerät M transportiert wird, finden laufend im Gerüst korrigierende Stelleingriffe s nach Maßgabe der Stellgröße $u_G$ statt, welche ihrerseits von der in einem Mischglied gebildeten Differenz zwischen einem vorgebbaren Sollwert w und der Ausgangsgröße $P_G$ eines mit P bezeichneten Prädiktors abhängt. Der sich unter der Wirkung des aktuellen Stelleingriffes s zwischen den Walzen des Gerüstes G ergebende Istwert wird - verspätet um die Transportzeit T des Bandes zwischen dem Stellort G und dem Meßort M - vom Meßgerät erfaßt. Für den Fall konstanter Bandgeschwindigkeit, wie sie für die folgenden Betrachtungen zugrundegelegt werden soll, gilt T = GM/v. Um genau dieselbe Zeit wird in einer mit B bezeichneten Bandverfolgungseinrichtung die aktuelle Stellgröße $u_G$ verzögert. Die Bandverfolgungseinrichtung B kann, wie angedeutet, in einem Totzeitglied bestehen, dessen Zeitkonstante der Transportzeit entspricht. Ein derartiges Totzeitglied hätte die Übertragungsfunktion $e^{-pT}$, wobei p der Laplace-Operator ist. Wird also in einem Mischglied 2 von der mit dem Meßgerät M erfaßten Meßgröße m das Ausgangssignal $u_M$ der Bandverfolgungseinrichtung B subtrahiert, dann wird aus der Meßgröße m jener Wert eliminiert, um welchen das ursprüngliche Merkmal des Bandes im Gerüst durch den Stelleingriff s korrigiert wurde, und das Ergebnis $p_M$ ist das ursprüngliche, unkorrigierte Merkmal des Bandes, wie es um die Zeit T vor dem Meßzeitpunkt zwischen den Arbeitswalzen ohne den erfolgten Stelleingriff s vorgelegen hatte.

Der Prädiktor P hat nun die Aufgabe, fortlaufend mit aus der Vergangenheit stammenden Werten des nicht durch Stelleingriffe korrigierten Merkmals $p_M$ den aktuellen, unkorrigierten Merkmalistwert $p_G$ zwischen den Arbeitswalzen gewissermaßen vorherzusagen. Die aktuelle Stellgröße $u_G$ bzw. der ihr entsprechende aktuelle Stelleingriff s ergibt sich dann als Abweichung dieses Vorhersagewertes $p_G$ von dem vorgebbaren Sollwert w. Diese Subtraktion entspricht dem bekannten Soll-Ist-Vergleich konventioneller Regelungen, wobei hier jedoch anstelle eines gemessenen Istwertes ein prädiktiv bestimmter Istwert verwendet wird.

In dem die Wirkungsweise des Prädiktors P in Figur 1a erklärenden Diagramm gemäß Figur 1b sind beispielhaft fünf in der Vergangenheit zwischen den Arbeitswalzen aufgetretene unkorrigierte Istwerte $p_{M1}$ bis $p_{M5}$ eingetragen. Diese sind für den betrachteten Zeitpunkt aus den letzten fünf in äquidistanten Abständen von dem Meßgerät M erfaßten Meßwerten m in der zuvor geschilderten Weise ermittelt worden und unterteilen die Breite F eines sich an das Meßgerät M anschließenden "Fensters" in vier gleiche Teile. Wenn davon ausgegangen werden kann, daß sich die unkorrigierten Istwerte $p_{Mn}$ innerhalb des Fensters nur langsam ändern, so läßt sich ihr Trend durch eine Gerade approximieren. Im Prädiktor P wird daher mit diesen fünf unkorrigierten Istwerten $p_{M1}$ bis $p_{M5}$ eine lineare Ausgleichsfunktion der Gestalt $y = a_0 + a_1 . x$ bestimmt und diese über die Strecke GM bis zu dem Ort, an welchem sich das Gerüst G befindet, extrapoliert, womit sich der gesuchte Vorhersagewert $p_G$ ergibt.

Die Koeffizienten $a_0$ und $a_1$ können nach der bekannten Methode der kleinsten Fehlerquadratsumme ermittelt werden, und aus dem in Figur 1b dargestellten geometrischen Sachverhalt ergibt sich der Vorhersagewert $p_G$ dann zu

$$p_G = a_0 + a_1 . n + a_1 (n-1) . GM/F,$$

wobei n die wählbare Anzahl der in einem Fenster der ebenfalls wählbaren Breite F jeweils auszuwertenden unkorrigierten Istwerte $p_M$ bedeutet. Im dargestellten Beispiel wäre n = 5. Wenn die Zeitintervalle, nach denen jeweils ein neuer aktueller unkorrigierter Istwert $p_M$ zu ermitteln und in die im Fenster auszuwertende Wertemenge neu aufzunehmen ist, mit $F/((n - 1) . v)$ festgelegt werden, dann werden n Meßwerte für äquidistante Stellen des auslaufenden Bandes bei der Auswertung des Fensterinhaltes berücksichtigt. Mit einer Fensterbreite F, welche ungefähr das Doppelte der Strecke GM beträgt, und mit einem Wert für n, der in der Größenordnung von 20 liegt, lassen sich beim dargestellten Anwendungsfall in der Praxis zufriedenstellende Ergebnisse erzielen.

Anstelle einer linearen Ausgleichsfunktion könnte auch eine quadratische Ausgleichsfunktion zur Bestimmung des Vorhersagewertes $p_G$ verwendet werden, womit allerdings der Rechenaufwand steigt. Desgleichen können bei der Auslegung des Prädiktors Erfahrungen über einen speziell zu erwartenden Verlauf der Größe $p_M$ eingebracht werden.

Mit dem erfindungsgemäßen Verfahren werden Vorhersagewerte für das zu beeinflussende Merkmal geliefert, mit deren Hilfe dieses Merkmal im Gerüst bereits korrigiert werden kann, bevor die entsprechende Bandstelle vom Meßgerät erfaßt wird. Sollwertänderungen werden in der kürzest möglichen Zeit unmittelbar in Stelleingriffe umgesetzt, wobei diese Sollwertänderungen sich nicht in dem ermittelten, unkorrigierten Istwert $p_M$ niederschlagen, so daß der Prädiktor P Sollwertänderungen überhaupt nicht wahrnimmt.

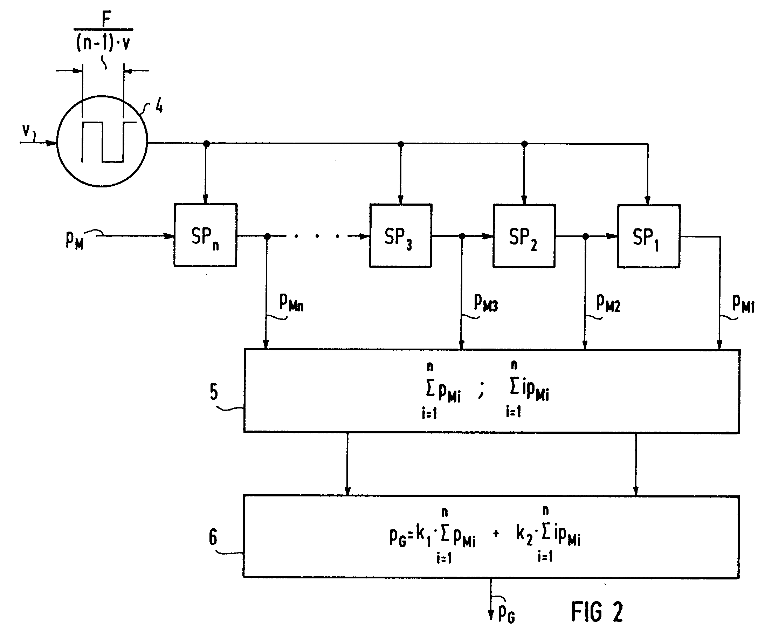

Figur 2 zeigt eine Möglichkeit für die prädiktive Bestimmung des aktuellen, unkorrigierten Istwertes $p_G$, welche sich besonders bei Implementierung mit Digitalrechnern bzw. mit Mikroprozessoren eignet. Entsprechend der Anzahl n der jeweils im Fenster betrachteten und zur Ermittlung der Ausgleichsfunktion ausgewerteten unkorrigierten Istwerte sind Speicher $SP_1$ bis $SP_n$ vorgesehen, welche von einem Taktgenerator 4 in der Weise gesteuert werden, daß sie bei jedem von diesem ausgegebenen Taktimpuls ihren Speicherinhalt an den benachbarten Speicher weitergeben und daraufhin die an ihrem Eingang anliegende Information übernehmen. Jeder mit den Ausgangssignalen des Meßgerätes M und dem Ausgangssignal $u_M$ der Bandverfolgungseinrichtung B ermittelte aktuelle, unkorrigierte Istwert $p_M$ wird auf diese Weise taktweise durch die Speicherkette $SP_n$ bis $SP_1$ hindurchgeschoben, so daß an den Speicherausgängen jeweils die letzten n abgetasteten unkorrigierten Istwerte $p_M$, welche mit $p_{M1}$ bis $p_{Mn}$ bezeichnet sind, zur Verfügung stehen. Hierzu wird die Periode der von dem Taktgenerator 4 ausgegebenen Impulse zu $F/((n - 1) . v)$ gewählt. Die Abtastung erfolgt in äquidistanten Schritten, d.h., es wird jeweils ein neuer Abtastwert erhalten, wenn eine bestimmte Länge des Bandes 1 das Meßgerät passiert hat. In einem als Hardware oder als Software realisierten Block 5 wird nun aus den unkorrigierten Istwerten $p_{M1}$ bis $p_{Mn}$ deren Summe und deren einfach gewichtete Summe

$$\sum_{i=1}^{n} p_{Mi}, \quad bzw. \quad \sum_{i=1}^{n} i \cdot p_{Mi}$$

gebildet. Die Weiterverarbeitung der Summe und der gewichteten Summe der unkorrigierten Istwerte zur Ermittlung der in Figur 1b dargestellten approximierenden linearen Ausgleichsfunktion erfordert bei Anwendung der Methode der kleinsten Fehlerquadratsumme die Auflösung eines linearen Gleichungssystems zur Bestimmung der Koeffizienten $a_0$ und $a_1$, woran sich dann die Extrapolation bis zum Stellort anschließen würde. Es wurde nun erkannt, daß diese Rechenoperationen abgekürzt werden können, wenn man den aktuellen, unkorrigierten Vorhersagewert $p_G$ als Linearkombination der einfachen und der gewichteten Summe der n abgetasteten unkorrigierten Istwerte entsprechend der Gleichung

$$p_G = k_1 \sum_{i=1}^{n} p_{Mi} + k_2 \sum_{i=1}^{n} i \cdot p_{Mi} \qquad (1)$$

bildet, wobei die konstanten Koeffizienten

$k_1 = -(1 + 3 \cdot GM/F) \cdot 2/n$

und

$k_2 = (1 + 2 \cdot GM/F) \cdot 6/(n \cdot (n + 1))$

sind. Dies erfolgt in dem mit 6 bezeichneten Block. Der damit sich ergebende Zeitgewinn ist insofern wesentlich, als eine Bestimmung des Wertes $p_G$ auf der Basis von jeweils n unkorrigierten Istwerten $p_{M1}...p_{Mn}$ jeweils innerhalb einer Taktimpulsperiode des Taktgenerators 4 abgeschlossen sein muß.

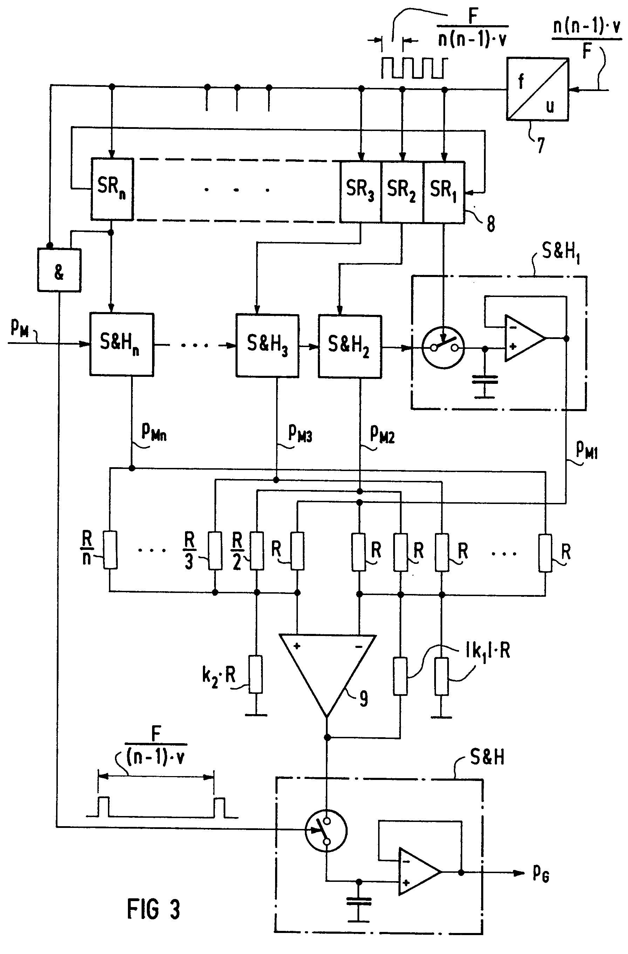

In der Figur 3 ist eine einfache, unter Verwendung analoger und digitaler Schaltungselemente in Hybrid-Technik ausgeführte Variante zur prädiktiven Bestimmung des aktuellen, stellortbezogenen Istwertes $p_G$ dargestellt. Die im Fenster der Breite F jeweils betrachteten unkorrigierten Istwerte $p_{M1}...p_{Mn}$ sind in Abtast-Halte-Gliedern $S\&H_1...S\&H_n$ abgespeichert, welche hintereinander angeordnet sind und deren Aufbau am Beispiel des Abtast-Halte-Gliedes $S\&H_1$ wiedergegeben ist. Ein Abtast-Halte-Glied, auch als Sample&Hold-Verstärker bezeichnet, besteht danach im wesentlichen aus einem elektronischen Schalter, einem Speicherkondensator und einem als Spannungsfolger beschalteten Operationsverstärker. Wenn der Schalter geschlossen ist, lädt sich der Speicherkondensator auf die Eingangsspannung auf und behält diesen Wert beim Öffnen des Schalters bei. Die in den Abtast-Halte-Gliedern $S\&H_1...S\&H_n$ befindlichen elektronischen Schalter werden in zyklischer Reihenfolge von den Registerstufen $SR_1... SR_n$ eines mittels eines Spannungs-Frequenz-wandlers 7 taktgesteuerten, rückgekoppelten Schieberegisters 8 betätigt. Von den n Registerstufen führt jeweils nur eine ein zur Schließung des ihr zugeordneten elektronischen Schalters führendes H(High)-Signal, und diese Information durchwandert die Schieberegisterkette von rechts nach links. Würde also beispielsweise das Ausgangssignal der Schieberegisterstufe $SR_1$ ein H-Signal sein, so wird der ihr zugeordnete Schalter geschlossen, und das Ausgangssignal des Abtast-Halte-Gliedes $S\&H_2$ wird von dem Abtast-Halte-Glied $S\&H_1$ übernommen. Beim nächsten Takt würde die Registerstufe $SR_2$ ein H-Signal aufweisen, so daß von dem Abtast-Halteglied $S\&H_2$ das Ausgangssignal des ihm vorgeordneten Abtast-Halte-Gliedes $S\&H_3$ übernommen wird. Diese Informationsweitergabe setzt sich mit jedem von dem Spannungsfrequenzwandler 7 gelieferten Taktimpuls fort, bis nach n Taktimpulsen der vom aktuellen Meßwert m abgeleitete unkorrigierte Istwert $p_M$ vom Abtast-Halte-Glied $S\&H_n$ übernommen wird. Es werden also jedesmal, wenn das Ausgangssignal der Schieberegisterstufe $SR_n$ ein H-Signal aufweist, was jeweils nach n Taktimpulsen der Fall ist, ein neuer unkorrigierter Istwert $p_M$ eingelesen und die zuvor in den Abtast-Halte-Gliedern gespeicherten Werte jeweils an ihre rechten Nachbarstufen weitergegeben. Damit stehen bei jeder Abtastung eines unkorrigierten Istwertes $p_M$ die letzten n Abtastwerte dieser Größe zur Verfügung. Diese Werte werden von einem als Summier-Subtrahierer beschalteten Operationsverstärker 9 entsprechend der Gleichung (1) verarbeitet. Dem als Taktgenerator verwendeten Spannungsfrequenzumsetzer 7 wird eine der Frequenz n(n-1).v/F proportionale Spannung zugeführt, welche er in eine Taktimpulsfolge mit der Periode F/(n.(n-1).v) umsetzt. Am Ausgang der Schieberegisterstufe $SR_n$ entsteht eine Impulsfolge, deren Frequenz um den Faktor n kleiner ist, und mit dieser Frequenz wird der Ausgang des Verstärkers 9 von einem weiteren Abtast-Halte-Glied S&H abgetastet. Es ergibt sich somit eine äquivalente Wirkungsweise mit der in Figur 2 dargestellten Anordnung, wobei die Schaltung nach Figur 3 wesentlich schneller arbeitet.

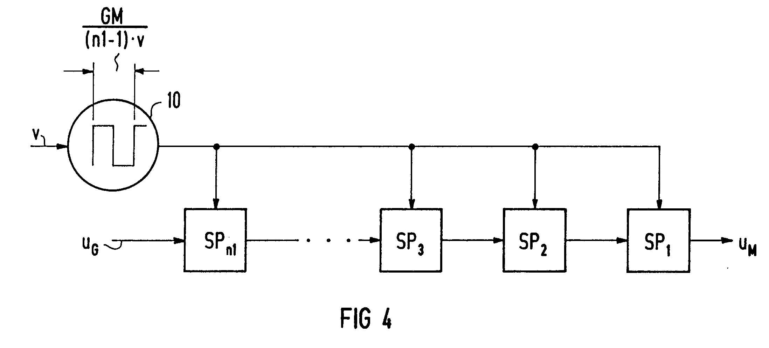

Figur 4 zeigt eine zur Implementierung in digitalen Rechenanlagen geeignete Variante für die in Figur 1a mit B bezeichnete und dort als analog arbeitendes Totzeitglied angedeutete Bandverfolgungseinrichtung. Wie bei der in Figur 2 dargestellten Anordnung ist wiederum eine Speicherkette aus n1 Speichern $SP_1...SP_{n1}$ vorgesehen, durch welche der jeweils aktuelle Wert $u_G$ im Takt der von einem Taktgenerator 10 ausgegebenen Impulse hindurchgeschoben wird. Wählt man bei n1 Speichern die Periode der von dem Taktgenerator 10 ausgegebenen Taktimpulse zu GM/((n1-1).v), dann ist die Ausgangsgröße $u_M$ des Speichers $SP_1$ die um die Transportzeit des Bandes zwischen dem Gerüst G und dem Meßgerät M verzögerte Eingangsgröße $u_G$. Es ist zweckmäßig, wenn mindestens immer dann ein neuer Wert von $u_M$ ausgegeben wird, wenn mit der in Figur 2 dargestellten Anordnung ein neuer Wert von $p_G$ ermittelt wird. Es sollte also bezüglich der Anzahl der zur Bandverfolgung eingesetzten Speicher folgendes Beziehung eingehalten werden:

n1 $\geq$ 1 + (n-1) . GM/F

GM stellt dabei wiederum den Abstand zwischen dem Stellort G und der Meßstelle M dar, während F die Fensterbreite ist.

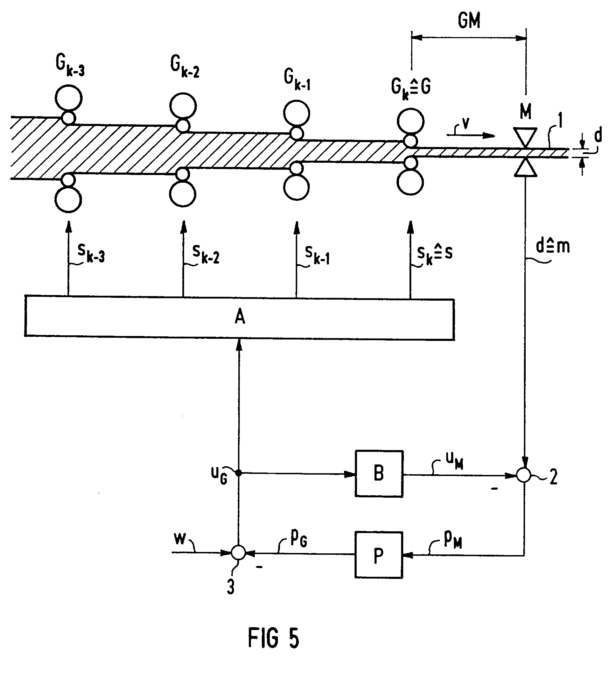

In Figur 5 ist die Anwendung des erfindungsgemäßen Verfahrens bei einer Dickenmonitorregelung für eine Walzstraße dargestellt. Die Walzstraße besteht aus k Gerüsten, von denen nur die letzten vier Gerüste $G_{k-3}...G_k$ dargestellt sind. Das zu beeinflussende Qualitätsmerkmal m ist die Dicke d des auslaufenden Bandes 1, welche von dem Meßgerät M erfaßt wird. Stelleingriffe $s_{k-3}...s_k$ verändern die Anstellungen der Arbeitswalzen in den einzelnen Gerüsten, womit die Dickenabnahmen und damit die Ausgangsdicken der Einzelgerüste beeinflußt werden. Die Ausgangsdicke des letzten Gerüstes $G_k$ ist die zu regelnde Dicke und abhängig von der in das letzte Gerüst einlaufenden Banddicke und der Anstellung des letzten Gerüstes. Im letzten Gerüst erfolgt also die eigentliche Festlegung der Dicke des Fertigbandes. Genauso wie bei der Anordnung entsprechend Figur 1a legt die Abweichung $u_G$ des prädiktiv ermittelten Vorhersagewertes $p_G$ von dem vorgegebenen Sollwert w fest, um welchen Betrag die Ausgangsdicke des letzten Gerüstes $G_k$ zu korrigieren ist. Ebenfalls in Übereinstimmung mit der in Figur 1a gezeigten Anordnung bildet die Bandverfolgung B den Bandtransport vom letzten Gerüst bis zum Dickenmeßgerät M ab.

Es könnten die Stellkorrekturen zur Erzielung der gewünschten Dicke d ausschließlich im letzten Gerüst vorgenommen werden. Da Abnahmeänderungen in einem Gerüst immer auch die Walzkraft und damit die Planlage des Bandes beeinflussen, empfiehlt es sich jedoch, die notwendigen Korrekturen auf mehrere Gerüste, wie dargestellt, aufzuteilen. Ausgehend von dem ermittelten Wert $u_G$ werden für die letzten vier Gerüste die zusätzlichen Stelleingriffe $s_{k-3}...s_{k-1}$ bestimmt. Der mit A bezeichnete Block beinhaltet dabei sowohl die Aufteilung auf die Gerüste als auch die zugehörigen Anpassungen. Die Art der Aufteilung wird nach den jeweiligen Erfordernissen des Einzelfalles festgelegt.

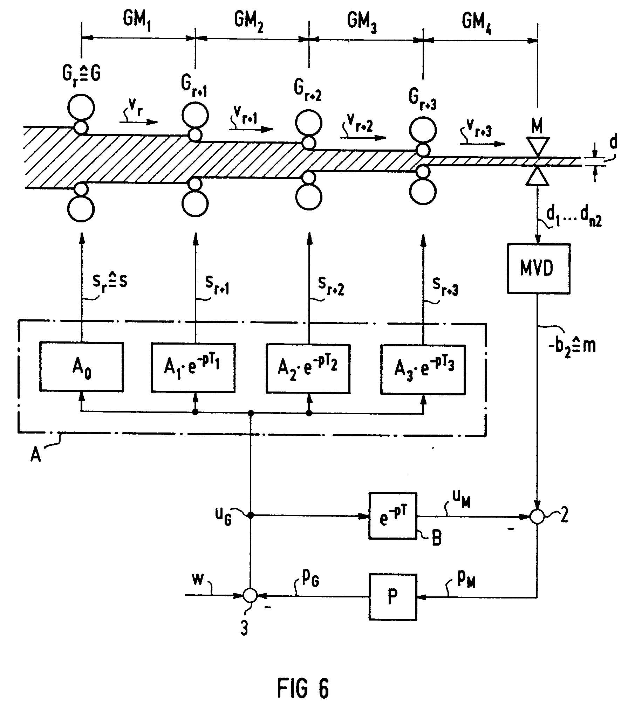

Figur 6 zeigt die Anwendung des erfindungsgemäßen Verfahrens bei einer Monitorregelung für das Bandprofil. Wiederum sind nur die letzten vier Gerüste $G_r...G_{r+3}$ einer Walzstraße dargestellt. Mit einem hinter dem letzten Gerüst $G_{r+3}$ angeordneten Profilmeßgerät M werden die Banddicken $d_1...d_{n2}$ für n2 Orte über der Bandbreite parallel, d.h. gleichzeitig erfaßt. Diese n2 Meßwerte werden von einer mit MVD bezeichneten Meßwertverarbeitungseinrichtung zu einem das Bandprofil in Querrichtung beschreibenden Wert m verarbeitet, welcher zur prädiktiven Bestimmung des Vorhersagewertes $p_G$ fürden aktuellen unkorrigierten Istwert benutzt wird. Mit dessen Abweichung $u_G$ von einem vorgegebenen Profilsollwert w werden dann über die in dem mit A bezeichneten Block zusammengefaßten Einzelanpassungen für die vier dargestellten Gerüste die aktuellen, korrigierenden Stelleingriffe bewirkt.

Die vier dargestellten Gerüste seien mit Biegesystemen ausgerüstet, welche die Funktion haben, die obere und untere Arbeitswalze an ihren Walzenzapfen bzw. Einbaustücken auseinanderzudrücken, so daß sich die Arbeitswalzen biegen. Eine Erhöhung dieser Biegekraft bewirkt eine Änderung des Walzspaltes zur konkaven Form, während eine Verringerung eine Änderung zur konvexen Form bewirken würde. Durch Variieren der Biegekräfte mittels geeigneter, korrigierender Stelleingriffe können also die Walzspaltformen kontinuierlich verändert werden, bis das aus dem Gerüst auslaufende Band das gewünschte Profil aufweist. In Warmwalzstraßen ist es von der Einlaufseite des Bandes aus betrachtet bis zu einem bestimmten Gerüst noch möglich, durch solche Änderungen der Walzspaltformen einen Materialquerfluß und dadurch eine Profiländerung des Bandes zu bewirken. Dieses sei beim dargestellten Beispiel das Gerüst $G_r$, und die erfindungsgemäße Profilmonitorregelung ist so konzipiert, daß die eigentliche Festlegung des Bandprofils in diesem Gerüst erfolgt. Daher gibt die Stellgröße $u_G$ an, um welchen Betrag das Profil im Gerüst $G_r$ zu korrigieren ist, und sie bestimmt über die Anpassung $A_0$ den Stelleingriff $s_r$. Die Bandverfolgung B, beispielsweise realisiert mittels eines Totzeitgliedes mit der Übertragungsfunktion $e^{-pT}$, bildet den Bandtransport vom Gerüst $G_R$ bis zum Meßgerät M ab, wobei die Transportzeit T unter Erfassung der in den einzelnen Walzabschnitten $GM_1$, $GM_2$, $GM_3$ und $GM_4$ auftretenden Bandgeschwindigkeiten $v_r$, $v_{r+1}$, $v_{r+2}$ und $v_{r+3}$ entsprechend der Beziehung

$$T = t_1 + t_2 + t_3 + t_4 \text{ mit}$$
$$t_1 = GM_1/v_r, \ t_2 = GM_2/v_{r+1}, \ t_3 = GM_3/v_{r+2} \text{ und } t_4 = GM_4/v_{r+3}$$

ermittelt wird. Die Realisierung des Prädiktors P und der Bandverfolgung B kann also genauso erfolgen, wie im Zusammenhang mit der Anordnung nach Figur 1a dargelegt wurde, mit der Maßgabe, daß als Abstand zwischen dem Gerüst $G_r$ und der Meßstelle M der Wert

$$GM = GM_1.v_{r+3}/v_r + GM_2.v_{r+3}/v_{r+1} + GM_3.v_{r+3}/v_{r+2} + GM_4$$

und die gemäß obiger Beziehung ermittelte Transportzeit T verwendet werden. Auf diese Weise werden die unterschiedlichen Banddicken in den einzelnen Walzabschnitten berücksichtigt.

Damit die im Gerüst $G_r$ vorgenommenen Profiländerungen sich nicht negativ auf die Planheit des Fertigbandes auswirken können, werden die Biegekräfte in den nachfolgenden Gerüsten $G_{r+1}...G_{r+3}$ entsprechend verändert. Dies erfolgt so, daß in jedem dem Gerüst $G_r$ nachfolgenden Gerüst dieselbe relative, d.h. auf die jeweilige Ausgangsdicke bezogene Änderung der Walzspaltform vorgenommen wird. In Bezug auf den Stelleingriff $s_r$ werden die Stelleingriffe $s_{r+1}$ bis $s_{r+3}$ von Gerüst zu Gerüst entsprechend den Transportzeiten $t_1$, $t_2$ und $t_3$ zwischen den Gerüsten zeitverzögert ausgegeben. Der dargestellte Block A enthält diese Zeitverzögerungen in Form von Totzeitgliedern mit den Zeitkonstanten $T_1 = t_1$, $T_2 = t_1 + t_2$ und $T_3 = t_1 + t_2 + t_3$ sowie die erforderlichen Anpassungen $A_1$ bis $A_3$, um die Regelabweichung $u_G$ in die entsprechenden Stelleingriffe umzusetzen. Anstatt die Zeitverzögerungen, wie dargestellt, mit analog arbeitenden Totzeitgliedern zu realisieren, kann natürlich auch auf die in der Figur 4 beschriebene Ausführungsform zurückgegriffen werden.

Das Bandprofil läßt sich durch seine Mittenüberhöhung beschreiben, d.h. durch den Wert, welcher angibt, um wieviel die Banddicke in der Mitte den arithmetischen Mittelwert der Dicken an den Bandkanten übersteigt. Bei positiver Mittenüberhöhung ist das Profil konvex, bei einem negativen Wert der Mittenüberhöhung konkav gewölbt. An und für sich könnte dieser Kennwert durch Messung von drei Banddickenwerten bestimmt werden. Zufällige Schwankungen (Streuwerte) einer so bestimmten Mittenüberhöhung könnten aber die Treffsicherheit der prädiktiven Bestimmung des entsprechenden unkorrigierten Mittenüberhöhungsistwertes am Stellort merklich beeinträchtigen und damit den Erfolg der Profilmonitorregelung vereiteln. Daher wird für eine Mittelung in Querrichtung gesorgt, indem in der mit MVD bezeichneten Meßwertverarbeitung für eine größere Anzahl von quer zum Band erfaßten Dickenmeßwerten $d_1...d_{n2}$ eine Ausgleichsparabel berechnet und der negativ bewertete Koeffizient ihres quadratischen Gliedes $-b_2$ gewissermaßen als ein gemittelter Wert der Mittenüberhöhung verwendet wird. Mit dem Sollwert w kann die Mittenüberhöhung des auslaufenden Bandes vorgegeben werden. Wird keine Mittenüberhöhung gewünscht, so wäre der Sollwert w auf Null zu setzen.

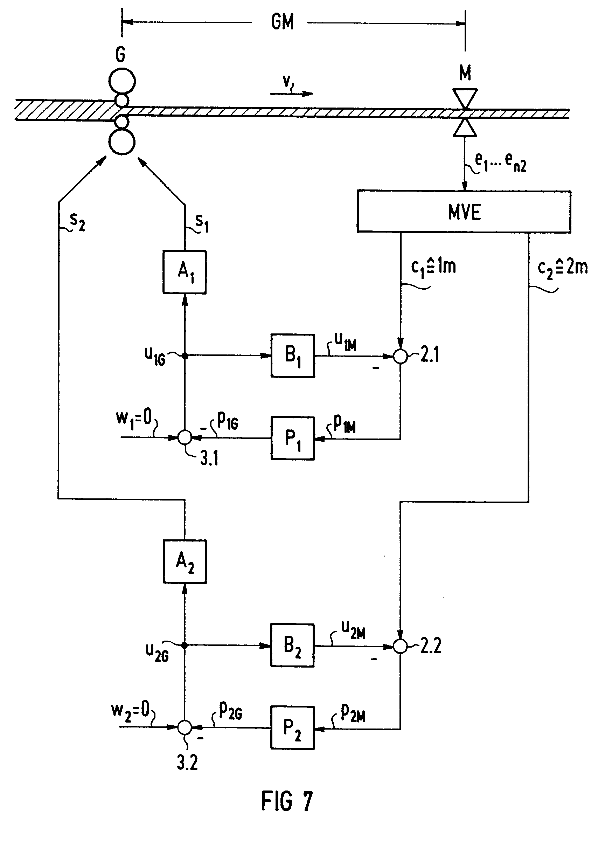

Figur 7 zeigt die Anwendung des erfindungsgemäßen Verfahrens bei einer Monitorregelung für die Planheit, womit die Entstehung von Welligkeiten in Walzrichtung verhindert werden soll. Bei dem Meßgerät M handelt es sich um ein sogenanntes Planheitsmeßgerät, welches relative Bandlängungen an mehreren Orten über der Bandbreite erfassen kann. An dem Ort der Bandbreite, an dem sich ein Minimalwert der Bandlängung ergibt, zeigt das Band keine Welligkeiten, während an den übrigen Orten, an denen eine Bandlängung gemessen wird, welche größer als dieser Minimalwert ist, das Band durch größere Dickenreduktion auf eine entsprechend größere Länge gewalzt wird. Als Folge davon weicht es in vertikaler Richtung aus, so daß Welligkeiten in Walzrichtung entstehen. Man unterscheidet einseitige Welligkeiten, die von einer Bandkante zur anderen an Intensität zunehmen, sowie symmetrische Welligkeiten, deren Intensität sich symmetrisch zur Bandmitte stetig verändert. In der Regel überlagern sich beide Arten von Welligkeiten.

In der mit MVE bezeichneten Meßwertverarbeitung wird nun aus einem Satz von über der Bandbreite gleichzeitig abgetasteten Bandlängungsmeßwerten $e_1...e_{n2}$ ein erster, für das Auftreten von einseitigen Welligkeiten charakteristischer Kennwert $c_1$ und ein zweiter, für das Auftreten von symmetrischen Welligkei-

ten charakteristischer Kennwert $c_2$ gebildet. Das Ziel der Planheitsregelung ist es, auf die Verstellung der Arbeitswalzen so einzuwirken, daß diese beiden Kennwerte zu Null werden und ein in Walzrichtung völlig planes Band entsteht. Hierzu werden zwei parallel arbeitende Regelkreise eingesetzt, welche in Aufbau und Wirkungsweise völlig der in Figur 1a dargestellten Anordnung gleichen. Der erste Monitorregelkreis, welcher aus dem Prädiktor $P_1$, der Bandverfolgungseinrichtung $B_1$ und der Anpassung $A_1$ besteht, dient zur Behebung von einseitigen Welligkeiten des Bandes. Ihm wird der Kennwert $c_1$ als Meßwert zugeführt, und er bewirkt den Stelleingriff $s_1$, welcher sich auf die Schräglage der Anstellung im letzten Gerüst G auswirkt. Mit dem zweiten Monitorregelkreis sollen symmetrische Welligkeiten unterdrückt werden. Ihm wird der Kennwert $c_2$ als Meßwert zugeführt. Der sich mit der zugehörigen Anpassung $A_2$ ergebende Stelleingriff $s_2$ verändert die Biegekraft im Gerüst G. Daraus ergibt sich eine symmetrische Änderung der Walzspaltform, so daß die Banddicke an den beiden Bandkanten gegenüber der Bandmitte größer oder kleiner wird, wodurch sich die relativen Bandlängungen entsprechend ändern. Damit beeinflußt der Stelleingriff $s_2$ die Planheit des Bandes in der Weise, daß sich im wesentlichen der Kennwert $c_2$ ändert, während der Kennwert $c_1$ unverändert bleibt. Umgekehrt beeinflußt der Stelleingriff $s_1$ die Planheit so, daß sich im wesentlichen nur der Kennwert $c_1$ ändert.

Mit einer minimalen Anzahl von drei über der Bandbreite gemessenen relativen Bandlängungen könnten bereits die Kennwerte $c_1$ und $c_2$ bestimmt werden. Genauso wie im Falle der zuvor beschriebenen Profil-Monitorregelung ist aber auch hier die die Eliminierung des Einflusses zufälliger Streuwerte von entscheidender Bedeutung für das bestimmungsgemäße Funktionieren der sich an die Meßwertverarbeitung anschließenden prädiktiven Bestimmung der aktuellen Istwerte $p_{1G}$ und $p_{2G}$. Es werden daher auch hier eine größere Anzahl von Meßpunkten $e_1...e_n$ über der Bandbreite vorgesehen und die erhaltenen Meßwerte mit einer quadratischen Ausgleichsfunktion approximiert. Anfangs- und Endpunkt dieser Ausgleichsparabel definieren eine Parabelsehne, deren Steigung den Kennwert $c_1$ bestimmt, während der senkrechte Abstand zwischen Sehnenmitte und Ausgleichsparabel - entsprechend der Mittenüberhöhung im Fall der Profil-Monitorregelung - den Kennwert $c_2$ festlegt.

Die von den Meßwertverarbeitungen MVD gemäß Figur 6 bzw. MVE gemäß Figur 7 vorgesehene Ermittlung der Koeffizienten der entsprechenden Ausgleichsparabeln kann in bekannter Weise durch eine Extremwertrechnung bzw. Auflösung eines Gleichungssystems von drei linearen Gleichungen erfolgen.

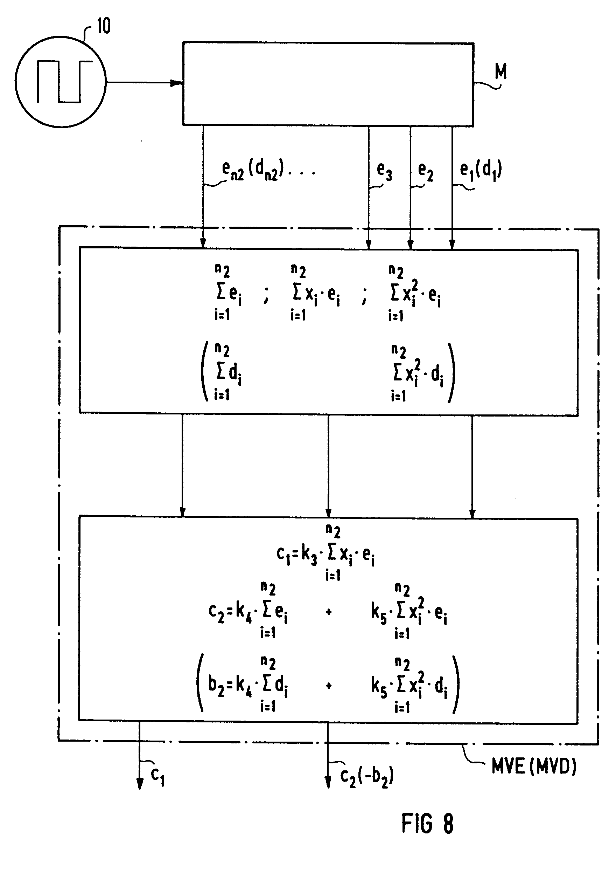

Vorteilhaft ist hierbei die Anwendung der Cramer'schen Regel und deren praxisgerechte Adaptierung. Die in Figur 8 skizzierte Methode führt einerseits zu einem Minimum an Rechenoperationen und gestattet andererseits eine unmittelbare Übernahme der Ausgleichsparabelkoeffizienten als regeltechnisch relevante Kennwerte $b_2$ bzw. $c_1$ und $c_2$. Wesentlich ist hierbei, daß die Meßwerte, nämlich die Dickenmeßwerte $d_1...d_{n2}$ im Fall der Profil-Monitorregelung bzw. $e_1...e_{n2}$ im Fall der Planheits-Monitorregelung, an symmetrisch zur Bandmitte gelegenen Orten erfaßt werden. Im Takt der von einem Taktgenerator 10 gelieferten Impulse werden diese Meßwerte parallel abgetastet und daraus in den Meßwerteverarbeitungen MVD bzw. MVE in einem ersten Schritt deren Summe $\Sigma d_i$ bzw. $\Sigma e_i$, deren mit dem jeweiligen Erfassungsort $x_i$, d.h. ihrem jeweiligen Abstand von der Bandmitte, einfach gewichtete Summe $\Sigma x_i e_i$ und deren mit dem jeweiligen Erfassungsort $x_i$ quadratisch gewichteten Summe $\Sigma x_i^2 \cdot d_i$ bzw. $\Sigma x_i^2 \cdot e_i$ ermittelt. Durch eine einfache Multiplikation dieser ermittelten Summenwerte mit Konstanten $k_3$, $k_4$ und $k_5$ ergeben sich dann in einem zweiten Schritt die Parabelkoeffizienten, nämlich $b_2$ im Falle der Profilregelung bzw. $c_1$ und $c_2$ im Falle der Planheitsregelung, welche unmittelbar von der Profil-Monitorregelung (Figur 6) bzw. der Planheits-Monitorregelung (Figur 7) zur Weiterverarbeitung übernommen werden können. Die Konstanten $k_3$, $k_4$ und $k_5$ liegen mit der Anzahl $n_2$ und den Erfassungsorten der Meßwerte fest.

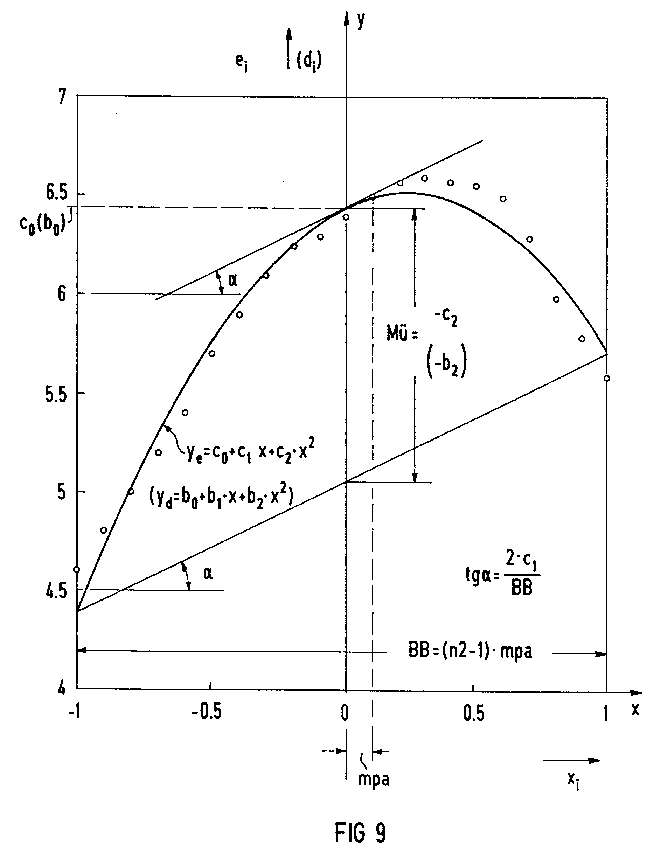

Figur 9 zeigt ein Schaubild zur Aufbereitung eines Satzes von beispielhaft zugrundegelegten Meßwerten in den Meßwertverarbeitungen MVD (Figur 6) bzw. MVE (Figur 7). Weder die Anzahl ($n2 = 21$) noch die Beträge ($d_i$ bzw. $e_i$) der Meßwerte sind beim dargestellten Beispiel repräsentativ für eine Profil- bzw. Planheits-Monitorregelung; für erstere könnte die Anzahl um den Faktor 5 größer und für letztere um denselben Faktor kleiner sein. Die Figur 9 soll lediglich die grundlegenden geometrischen Verhältnisse deutlich hervortreten lassen.

In dem Koordinatensystem der Figur 9 verläuft die x-Achse quer zum Band und die y-Achse ($x = 0$) entspricht der Bandmitte. $x = -1$ und $x = 1$ entsprechen Punkten in der Nähe der Bandkanten. Die mit "o" bezeichneten Meßwerte sind an symmetrisch zur Bandmitte gelegenen Meßorten bzw. Meßpunkten erfaßt worden, welche jeweils voneinander den konstanten Abstand mpa aufweisen. Der von den $n2 = 21$ Meßpunkten überdeckte Bereich umfaßt also eine Bandbreite von $BB = (n2-1).mpa$. Mit den Meßwerten $e_i$ wurden nach der im Zusammenhang mit Figur 8 beschriebenen Methode die Koeffizienten $c_1$ und $c_2$ bzw. $b_2$ und in Fortführung dieser Methode die Koeffizienten $c_0$ bzw. $b_0$ und $b_1$ berechnet, womit sich der dargestellte Verlauf der Ausgleichsparabeln

EP 0 575 636 A1

$y_e = c_0 + c_1 . x + c_2 . x^2$ bzw. $y_d = b_0 + b_1 . x + b_2 . x^2$

ergibt.

Aus der Figur 9 wird ersichtlich, daß der Koeffizient $c_1$ als Maß für die Schräglage einer um den Winkel $\alpha$ geneigten Arbeitswalze genommen werden kann und daß der Koeffizient $c_2$ bzw. $b_2$ die Wölbung der Arbeitswalzen bwz. die Mittenüberhöhung MÜ des Bandes darstellt. Es kann zur Elimination von in der Nähe der Bandkanten besonders großer Störeinflüsse der Meßpunktbereich auf einen kleineren Bereich als die tatsächliche Bandbreite BB beschränkt werden.

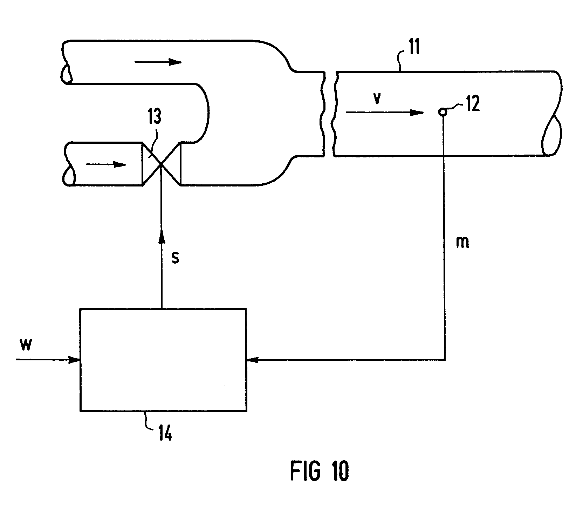

In Figur 10 ist die Anwendung des erfindungsgemäßen Verfahrens bei einer Mischungsregelung angedeutet. Dort soll die Temperatur eines ein Rohr 11 mit der Geschwindigkeit v durchströmenden Mediums durch den auf die Stellung des Ventils 13 wirkenden Eingriff s auf einen bestimmten Sollwert w geregelt werden. Aus anlagenspezifischen Gründen kann der Temperaturfühler 12 nur in einigem Abstand vom Ort des Stelleingriffes angeordnet werden. Auch hier kann der aktuelle Temperaturistwert m erst nach einer bestimmten durch die Transportzeit des Mediums bedingten Totzeit erfaßt werden, und es liegen praktisch dieselben Verhältnisse vor wie bei der prinzipiellen Anordnung gemäß Figur 1a, weshalb auch hier das erfindungsgemäße Verfahren in dem mit 14 bezeichneten Reglerblock entsprechend realisiert ist. Ganz ähnliche Verhältnisse ergeben sich in diesem Zusammenhang auch bei der Temperaturregelung von Durchlauferhitzern.

Es eröffnet sich damit für die Erfindung ein weites Anwendungsgebiet zur Regelung totzeitbehafteter Regelstrecken.

**Patentansprüche**

1.  Verfahren zur Regelung totzeitbehafteter Regelstrecken, insbesondere zur Monitorregelung in Bandstraßen, wobei
    a) aus dem am Meßort (M) erfaßten Istwert (m) der korrigierende Einfluß des zugehörigen Stelleingriffs (s) eliminiert wird,
    b) mit einer Reihe solcher, zeitlich aufeinanderfolgender unkorrigierter Istwerte ($p_M$) eine prädiktive Bestimmung eines entsprechenden, aktuellen, stellortbezogenen Istwertes ($p_G$) vorgenommen wird,
    c) mit der Abweichung ($u_G$) dieses vorhergesagten Istwertes ($p_G$) von einem vorgegebenen Sollwert (w) der aktuelle, korrigierende Stelleingriff (s) bewirkt wird.

2.  Verfahren nach Anspruch 1, **dadurch gekennzeichnet,** daß die prädiktive Bestimmung des aktuellen, unkorrigierten Istwertes ($p_G$) mittels Extrapolation einer die Reihe der unkorrigierten Istwerte ($p_M$) approximierenden Ausgleichsfunktion erfolgt.

3.  Verfahren nach Anspruch 2, **dadurch gekennzeichnet,** daß die Approximation mit einer linearen Ausgleichsfunktion erfolgt.

4.  Verfahren nach Anspruch 1, **dadurch gekennzeichnet,** daß fortlaufend eine bestimmte Anzahl äquidistant abgetasteter unkorrigierter Istwerte ($p_{M1}...p_{Mn}$) abgespeichert wird und der aktuelle, unkorrigierte Istwerts ($p_G$) als Linearkombination ihrer Summe ($\Sigma \ p_{Mi}$) und ihrer einfach gewichteten Summe ($\Sigma i.p_{Mi}$) bestimmt wird, wobei die Koeffizienten ($k_1,k_2$) dieser Linearkombination Konstanten sind.

5.  Verfahren nach Anspruch 4, **dadurch gekennzeichnet,** daß die Linearkombination mittels eines als Mehrfach-Subtrahierer beschalteten Operationsverstärkers gebildet wird, dessen Eingänge mit den jeweils abgespeicherten Istwerten ($p_{M1}...p_{Mn}$) beaufschlagt werden.

6.  Verfahren nach Anspruch 2, 3 oder 4, **dadurch gekennzeichnet,** daß der Wert der Abweichung ($u_G$) des prädiktiv ermittelten Istwertes ($p_G$) vom Sollwert (w) in äquidistanten Schritten durch eine Kette von $n_1$ Speichern geschoben wird, wobei die Durchlaufzeit eines Abweichungswertes ($u_G$) durch die Speicherkette der Totzeit (T) der Regelstrecke entspricht.

7.  Verfahren nach einem der vorhergehenden Ansprüche bei Bandstraßen mit der Banddicke als Regelgröße, **dadurch gekennzeichnet,** daß in den vor dem letzten Gerüst ($G_K$) befindlichen Gerüsten mit dem Stelleingriff ($s_m$) im letzten Gerüst übereinstimmende oder dem Zustand des Bandmaterials angepaßte korrigierende Stelleingriffe ($s_{k-1}...s_{k-3}$) bewirkt werden.

8

8. Verfahren nach einem der Ansprüche 1 bis 6 bei Bandstraßen mit dem Bandprofil als Regelgröße, **dadurch gekennzeichnet,** daß aus einer Reihe von über der Bandbreite gemessenen Dickenmeßwerten ($d_1...d_{n2}$) ein der Mittenüberhöhung entsprechender Istwert ($m$) erfaßt und außer dem aktuellen korrigierenden Stelleingriff ($s_r$) bezüglich der Biegekraft eines Gerüstes ($G$) weitere, entsprechende Stelleingriffe ($s_{r+1}...s_{r+3}$) in nachfolgenden Gerüsten ($G_{r+1}...G_{r+3}$) bewirkt werden, welche entsprechend den Transportzeiten ($t_1,t_2,t_3$) des Bandes von Gerüst zu Gerüst zeitversetzt zur Wirkung gebracht werden.

9. Verfahren nach Anspruch 8, **dadurch gekennzeichnet,** daß als für die Mittenüberhöhung charakteristischer Kennwert der negativ bewertete Koeffizient ($-b_2$) des quadratischen Gliedes einer die Dickenmeßwerte ($d_1...d_{n2}$) approximierenden quadratischen Ausgleichsfunktion verwendet wird.

10. Verfahren nach einem der Ansprüche 1 bis 6 bei Bandstraßen, mit der Planheit als Regelgröße, **dadurch gekennzeichnet,** daß mittels eines Planheitsmeßgeräts relative Bandlängungen ($e_1...e_{n2}$) an mehreren Orten über der Bandbreite gemessen werden, daraus ein erster, für das Auftreten von einseitigen Welligkeiten charakteristischer Kennwert ($c_1$) und ein zweiter, für das Auftreten von zur Bandmitte symmetrischen Welligkeiten charakteristischer Kennwert ($c_2$) gebildet werden, wobei der erste Kennwert zu korrigierenden Stelleingriffen ($s_1$) bezüglich der Schräglage der Anstellung und der zweite Kennwert zu korrigierenden Stelleingriffen ($s_2$) bezüglich der Biegekraft verarbeitet wird.

11. Verfahren nach Anspruch 10, **dadurch gekennzeichnet,** daß die beiden charakteristischen Kennwerte ($c_1,c_2$) von Funktionswerten oder Koeffizienten einer die Meßwerte des Planheitsmeßgerätes approximierenden quadratischen Ausgleichsfunktion abgeleitet werden.

12. Verfahren nach Anspruch 9 oder 10, **dadurch gekennzeichnet,** daß die Meßwerte ($d_i$ bzw. $e_i$) an symmetrisch zur Bandmitte gelegenen Orten ($x_i$) erfaßt werden und die charakteristischen Kennwerte ($b_2$ bzw. $c_1$ und $c_2$) nach den Beziehungen

$$b_2 = k_4 \, \Sigma d_i + k_5 \Sigma x_i^2 \cdot di$$

bzw.

$$c_1 = k_3 \, \Sigma x_i \cdot e_i,$$

und

$$c_2 = k_4 \, \Sigma e_i + k_5 \Sigma x_i^2 \cdot e_i$$

ermittelt werden, wobei $k_3,k_4$ und $k_5$ von der Anzahl der Meßwerte und ihren Erfassungsorten ($x_i$) abhängige Konstanten sind.

FIG 1a

FIG 1b

FIG 2

EP 0 575 636 A1

FIG 3

12

$$\frac{GM}{(n1-1) \cdot v}$$

10

v →

$u_G$ →  SP$_{n1}$  → · · · → SP$_3$ → SP$_2$ → SP$_1$ → $u_M$

FIG 4

EP 0 575 636 A1

FIG 5

FIG 6

EP 0 575 636 A1

FIG 7

16

FIG 8

FIG 9

FIG 10

Europäisches
Patentamt

**EUROPÄISCHER RECHERCHENBERICHT**

Nummer der Anmeldung

EP    92 10 9760
PAGE1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | PROCEEDINGS OF THE 30TH IEEE CONFERENCE ON DECISION AND CONTROL Bd. 3, 11. Dezember 1991, METROPOLE HOTEL, BRIGHTON, ENGLAND Seiten 3053 - 3055 AKIRA KOJIMA ET AL. 'Robust Stabilization of Time Delay System against additive Perturbations' * insgesamt * --- | 1 | G05D5/03 B21B37/12 G05B13/02 |
| X | AUTOMATISIERUNGSTECHNIK - AT Bd. 37, Nr. 3, März 1989, MUNCHEN DE Seiten 104 - 110 C. T. CAO 'Entwurf eines robusten prädiktiven Reglers für totzeitbehaftete Regelsysteme' * Zusammenfassung; Abschnitte 1 - 3, 5; Figuren 1 - 9 * --- | 1-4,6 | |
| X | FR-A-2 617 615 (ROBERT BOSCH GMBH) * ZUsammenfassung; Seite 1, Zeile 5 - Seite 4, Zeile 22; Seite 8; Zeile 7 - Seite 10, Zeile 15; Figuren 3 - 5 * --- | 1-4,6 | |

RECHERCHIERTE SACHGEBIETE (Int. Cl.5 )

| Kategorie | | Betrifft Anspruch | |
|---|---|---|---|
| A | HITACHI REVIEW Bd. 39, Nr. 4, August 1990, TOKYO JP Seiten 221 - 230 SHIGERU HISHIKAWA ET AL. 'New Control Techniques for Cold Rolling Mills - Applications to Aluminium Rolling -' * Zusammenfassung; Abschnitte "Introduction", "Outline of the Facility", "Features of each Control Method" - nur Passage "Smith AGC Method"; Figuren 1 - 6 * --- -/-- | 1 | B21B D21F B29C B05B G05D G05B |

Der vorliegende Recherchenbericht wurde für alle Patentansprüche erstellt

| Recherchenort | Abschlußdatum der Recherche | Prüfer |
|---|---|---|
| BERLIN | 01 MAERZ 1993 | BEITNER M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)

Europäisches
Patentamt

EUROPÄISCHER RECHERCHENBERICHT

Nummer der Anmeldung

EP    92 10 9760
PAGE2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 455 382 (FAPIANO CONSULTING, INC.)<br>* Zusammenfassung; Seite 2, Zeile 3 -<br>Seite 3, Zeile 2; Seite 3, Zeilen 16 - 50;<br>Seite 5, Zeilen 23 - 35; Figure 1 *<br>--- | 7 | |
| A | EP-A-0 307 076 (TORAY INDUSTRIES, INC.)<br>* Zusammenfassung; Seite 4, Zeile 15 -<br>Seite 5, Zeile 2; Seite 5, Zeile 24 -<br>Seite 6, Zeile 13; Seite 6, Zeile 39 -<br>Seite 8, Zeile 4; Figuren 8 - 10 *<br>--- | 8 | |
| A | PATENT ABSTRACTS OF JAPAN<br>vol. 13, no. 93 (P-838)6. März 1989<br>& JP-A-63 276 604 ( MITSUBISHI HEAVY IND<br>LTD ) 14. November 1988<br>* Zusammenfassung *<br>--- | 1 | |
| A | PATENT ABSTRACTS OF JAPAN<br>vol. 12, no. 123 (P-690)16. April 1988<br>& JP-A-62 248 003 ( ISHIKAWAJIMA HARIMA<br>HEAVY IND CO LTD ) 29. Oktober 1987<br>* Zusammenfassung *<br>----- | 1 | RECHERCHIERTE SACHGEBIETE (Int. Cl.5 ) |

Der vorliegende Recherchenbericht wurde für alle Patentansprüche erstellt

| Recherchenort | Abschlußdatum der Recherche | Prüfer |
|---|---|---|
| BERLIN | 01 MAERZ 1993 | BEITNER M. |